(19) Europäisches Patentamt
European Patent Office
Office européen des brevets

(11) **EP 3 672 779 B1**

(12) **EUROPÄISCHE PATENTSCHRIFT**

(45) Veröffentlichungstag und Bekanntmachung des Hinweises auf die Patenterteilung:
**28.09.2022   Patentblatt 2022/39**

(21) Anmeldenummer: **18759624.2**

(22) Anmeldetag: **24.08.2018**

(51) Internationale Patentklassifikation (IPC):
*B29C 49/78* *(2006.01)*      *B29C 49/64* *(2006.01)*
*B29C 49/68* *(2006.01)*      *B29C 49/06* *(2006.01)*

(52) Gemeinsame Patentklassifikation (CPC):
**B29C 49/786; B29C 49/6418; B29C 49/68;**
B29C 49/06; B29C 49/6445; B29C 49/6454;
B29C 49/6472

(86) Internationale Anmeldenummer:
**PCT/EP2018/072926**

(87) Internationale Veröffentlichungsnummer:
**WO 2019/038441 (28.02.2019 Gazette 2019/09)**

(54) **VERFAHREN UND VORRICHTUNG ZUM ERWÄRMEN VON KUNSTSTOFFVORFORMLINGEN**

METHOD AND DEVICE FOR HEATING PLASTIC PREFORMS

PROCÉDÉ ET DISPOSITIF DE CHAUFFE DE PRÉFORMES EN MATIÈRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2017   DE 102017119492**

(43) Veröffentlichungstag der Anmeldung:
**01.07.2020   Patentblatt 2020/27**

(73) Patentinhaber: **Krones AG**
**93073 Neutraubling (DE)**

(72) Erfinder:
• **FINGER, Dieter**
**93073 Neutraubling (DE)**
• **KITZINGER, Thomas**
**93073 Neutraubling (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(56) Entgegenhaltungen:
JP-A- S6 034 827        US-A1- 2005 146 065
US-A1- 2011 294 086     US-A1- 2013 011 807

• DATABASE WPI Week 200010 Thomson Scientific, London, GB; AN 2000-110643 XP002786600, -& JP H11 348106 A (TOYO SEIKAN KK) 21. Dezember 1999 (1999-12-21)

EP 3 672 779 B1

## Beschreibung

Die vorliegende Erfindung bezieht sich auf ein Verfahren und eine Vorrichtung zum Erwärmen von Kunststoffvorformlingen. Aus dem Stand der Technik, zB US2011/294086A1, US2013/011807A1, US2005/146065A1, JPH11348106A und JPS6034827A, die Verfahren und Vorrichtungen nach den Oberbegriffen offenbaren, ist es seit Langem bekannt, dass Kunststoffvorformlinge in einem Ofen erwärmt werden und anschließend in einer Umformungseinrichtung wie beispielsweise einer sogenannten Streckblasmaschine zu Behältnissen umgeformt werden. Üblicherweise weisen entsprechende Erwärmungseinrichtungen bzw. Öfen eine bestimmte Anzahl an Heizelementen wie beispielsweise Heizkästen auf, welche in Laufrichtung der Kunststoffvorformlinge hintereinander angeordnet sind. Am Auslauf dieser Heizeinrichtung bzw. des Ofens ist teilweise eine Temperaturmesseinrichtung wie beispielsweise ein Pyrometer zur berührungslosen Messung der Temperatur der Kunststoffvorformlinge angeordnet. Diese Messung dient einerseits dazu, um nur qualitativ hochwertige Flaschen an die Folgemaschine, wie etwa eine Streckblasmaschine, weiterzuleiten. Des Weiteren kann diese Temperatur dazu dienen, um Stellgrößen für die Heizleistung nachzuregeln und damit die Temperatur der Kunststoffvorformlinge im Prozess stabil zu halten.

Die Durchlaufzeit durch diesen Ofen beträgt ca. 20 Sekunden. Dadurch entsteht eine Totzeit. Diese Totzeit führt dazu, dass frühestens nach 20 Sekunden damit begonnen werden kann, Störgrößen auszuregeln. Während dieser Zeit kann die Qualität der Behältnisse noch nicht gewährleistet werden. Diese müssten schlimmstenfalls ausgeschleust werden. Gerade beim Anlauf einer Produktion muss mit Annahmen gerechnet werden, das heißt es wird von einer bestimmten Preform-Temperatur ausgegangen. In der Praxis kann jedoch die tatsächliche Temperatur weit neben dieser angenommenen Temperatur liegen, dann benötigt die Erwärmungseinrichtung bzw. der Ofen sehr lange, bis der Prozess optimal eingeregelt ist. Dabei sind Störgrößen beispielsweise unterschiedliche Temperaturen der Kunststoffvorformlinge, die insbesondere durch eine nicht einheitliche Lagerung der Behältnisse hervorgerufen werden. Daneben ergeben sich unterschiedliche Temperaturen auch durch eine fehlende Vortemperierung in der Halle.

Der vorliegenden Erfindung liegt daher die Aufgabe zugrunde, eine schnellere Temperierung zu erreichen bzw. auch im Falle eines Nachregelns kürzere Ausfallzeiten.

Diese Aufgabe wird erfindungsgemäß durch die Verfahren und Vorrichtungen der unabhängigen Patentansprüche erreicht. Vorteilhafte Ausführungsformen und Weiterbildungen sind Gegenstand der Unteransprüche.

Bei einem erfindungsgemäßen Verfahren zum Erwärmen von Kunststoffvorformlingen werden die Kunststoffvorformlinge entlang eines vorgegebenen Transportpfads transportiert und während dieses Transports erwärmt. Dabei ist entlang des Transportpfads wenigstens ein erster Heizabschnitt mit wenigstens einem ersten Heizelement und bevorzugt mehreren ersten Heizelementen sowie ein zweiter Heizabschnitt mit wenigstens einem zweiten Heizelement und bevorzugt mehreren zweiten Heizelementen angeordnet.

Erfindungsgemäß wird mittels einer ersten Temperaturmesseinrichtung eine Ist-Temperatur der Kunststoffvorformlinge vor oder in einem Anfangsbereich des Transportpfads gemessen und in Abhängigkeit von dieser Ist-Temperatur der Kunststoffvorformlinge wird zumindest das erste Heizelement bzw. eines der ersten Heizelemente (allgemein wenigstens ein Heizelement des ersten Heizabschnitts) und/oder werden zumindest die ersten Heizelemente derart angesteuert, dass die Kunststoffvorformlinge nach einer Erwärmung durch dieses erste Heizelement oder diese ersten Heizelemente eine vorgegebene Soll-Temperatur aufweisen.

Bevorzugt wird die Temperatur gemessen, bevor mit der eigentlichen Erwärmung begonnen wird, insbesondere also, bevor der betreffende Kunststoffvorformling das erste Heizelement bzw. eine Gruppe von ersten Heizelementen erreicht. Es wäre jedoch auch denkbar, die Temperatur zu messen, nach dem der Kunststoffvorformling bereits eine bestimmte Anzahl an Heizelementen passiert hat

Insbesondere handelt es sich bei dem Anfangsbereich um eine erste Hälfte des gesamten Transportpfades der Kunststoffvorformlinge, bevorzugt um ein erstes Drittel des gesamten Transportpfades der Kunststoffvorformlinge, bevorzugt um ein erstes Viertel des gesamten Transportpfades der Kunststoffvorformlinge, besonders bevorzugt um ein erstes Achtel des gesamten Transportpfades der Kunststoffvorformlinge.

Bevorzugt wird dabei der Transportpfad in Transportabschnitte und insbesondere in einen ersten und einen zweiten Heizabschnitt unterteilt. Der erste und zweite Heizabschnitt enthalten hier jeweils wenigstens ein erstes und ein zweites Heizelement und bevorzugt erste und zweite Heizelemente. Der erste Heizabschnitt dient daher insbesondere dazu, um eine bestimmte einheitliche Soll-Temperatur auf alle Kunststoffvorformlinge aufzubringen. Die eigentliche gewünschte Erwärmung wird in dem zweiten Transport- bzw. Heizabschnitt erreicht. Dabei können der Transportabschnitt, in dem die Soll-Temperatur erreicht wird und der Transportabschnitt, in dem die Profilierung erfolgt auch unterschiedlich lang sein. Bevorzugt ist derjenige Abschnitt, in dem die Soll-Temperatur erreicht wird, kürzer als der Abschnitt, in dem die Profilierung bzw. die individuelle Erwärmung erfolgt.

Bei einem bevorzugten Verfahren werden die Kunststoffvorformlinge nach ihrer Erwärmung umgeformt und insbesondere zu Kunststoffbehältnissen wie Kunststoffflaschen umgeformt und insbesondere geblasen. Dieses Umformen kann dabei insbesondere mit Blasluft erfolgen, es wäre jedoch auch ein Umformen durch ein flüssiges Produkt und insbesondere das abzufüllende Getränk denkbar.

Bevorzugt hat damit auch der Transportpfad der Kunststoffvorformlinge zwei Abschnitte. Insbesondere handelt es sich bei der Erwärmungseinrichtung um einen Infrarotofen, das heißt bei den einzelnen Heizelementen handelt es sich bevorzugt um Infrarotheizelemente. Besonders bevorzugt weist die Erwärmungseinrichtung eine Vielzahl von ersten und zweiten Heizelementen auf (wobei wie oben erwähnt, die ersten Heizelemente bevorzugt in dem ersten Heizabschnitt angeordnet sind die zweiten Heizelemente in dem zweiten Heizabschnitt). Weiterhin ist es auch möglich, dass die Kunststoffvorformlinge während ihrer Erwärmung gedreht werden und insbesondere um ihre eigene Längsachse bzw. Längsrichtung gedreht werden. Neben einem Infrarotofen wäre es jedoch auch denkbar, dass die Erwärmung mittels Mikrowellen erfolgt, das heißt insbesondere durch einen Mikrowellenofen.

In diesem Falle könnte die Erwärmungseinrichtung einen stationären Aktivator und/oder Resonator aufweisen, durch den die Kunststoffvorformlinge transportiert werden.

Bei einem weiteren bevorzugten Verfahren werden wenigstens zwei Sollwertvorgaben vorgegeben. Dabei ist es denkbar, dass die erste Sollwertvorgabe (insbesondere eine Solltemperatur) nach dem Ende des Temperaturausgleichs vorgegeben wird. Dabei kann diese erste Sollwertvorgabe beispielsweise im Bereich einer Umlenkung der Kunststoffvorformlinge vorgegeben werden, es wäre jedoch auch möglich, dass die erste Sollwertvorgabe in einem Bereich des ersten Heizabschnitts vorgegeben wird, beispielsweise in einem Bereich der ersten Heizelemente. So kann diese erste Sollwertvorgabe in einem Bereich der Heizelemente auf der Ofenvorderseite erfolgen, beispielsweise in der Mitte des ersten Heizabschnitts (der hier durch die Ofenvorderseite gebildet wird).

Die Erfindung schlägt damit vor, dass die tatsächliche Temperatur der Kunststoffvorformlinge bereits am oder vor dem Einlauf (bzw. dem Anfangsbereich) der Erwärmungseinrichtung gemessen wird. Eine Steuerungseinrichtung kann dann bevorzugt eine Differenz zwischen der tatsächlichen Temperatur der Kunststoffvorformlinge und der angenommenen Temperatur am Einlauf des Ofens ermitteln und auf diese Weise die Energie berechnen, die benötigt wird, um die Kunststoffvorformlinge auf ein definierten Ausgangslevel (insbesondere am Ende des ersten Heizabschnitts) zu bringen. Daraufhin wird das wenigstens eine erste Heizelement und bevorzugt mehrere erste Heizelemente dazu verwendet, um diesen Ausgangslevel herzustellen. Auf diese Weise kann dann bei der Profilierung von einheitlichen Ausgangsbedingungen ausgegangen werden. Dabei ist es bevorzugt denkbar, dass bei dem ersten Heizelement eine Stellgröße so gesteuert wird, dass im Wesentlichen die ermittelte Energie eingebracht wird:

$$E = c * m * \Delta\vartheta$$

c ist dabei die spezifische Wärmekapazität, m die Masse und $\Delta\vartheta$ die Temperaturdifferenz zwischen einem Soll-Wert und einem Ist-Wert der Temperatur der Kunststoffvorformlinge.

Weiterhin lässt sich die eingebrachte Energie wie folgt berechnen:

$$E = P * t * \eta_{Ofen} * \alpha$$

Dabei bezeichnet P die Heizleistung des wenigstens ersten Heizelement, t die Verweilzeit vor den ersten Heizelementen, $\eta_{Ofen}$ den Wirkungsgrad des Ofens und $\alpha$ den Absorptionsgrad des Kunststoffvorformlings.

Für die Kunststoffvorformlinge spezifische Materialkonstanten und Sortenparameter sind die spezifische Wärmekapazität, die Masse und der Absorptionsgrad des Kunststoffvorformlings. Diese drei Werte können zu einer gemeinsamen sortenabhängigen Materialkonstante zusammengefasst werden:

$$k_{Mat} = c * m / \alpha = P * t * \eta_{Ofen} * \Delta\vartheta^{-1}$$

Diese Gleichung ergibt sich aus den oben genannten Gleichungen.

Bevorzugt wird durch ein weiteres Verfahren die besagte Materialkonstante der Kunststoffvorformlinge bestimmt. Bevorzugt wird zu diesem Zweck ein Kunststoffvorformling mit einer definierten Heizleistung über eine bestimmte Verweilzeit im Ofen beaufschlagt und die Kunststoffvorformlingstemperatur am Ofeneinlauf und Ofenauslauf wird gemessen. Bevorzugt hält dabei der Kunststoffvorformling am Auslauf des Ofens vor einer Temperaturmesseinrichtung und insbesondere direkt vor einer Temperaturmesseinrichtung wie insbesondere, aber nicht ausschließlich einem Pyrometer an. Anschließend können über den Temperaturgradienten Rückschlüsse auf die Dicke des Kunststoffvorformlings getroffen werden. Daneben ist bevorzugt für eine präzise Ermittlung der Materialkonstanten eine gewisse Ausgleichszeit vorgesehen, sodass nicht nur die Oberflächentemperatur bestimmt wird, die tendenziell höher ist und insbesondere das Messergebnis verfälschen würde.

Bevorzugt wird die besagte Materialkonstante jeweils beim Einrichten einer neuen Vorgehensweise bzw. eines neuen Rezepts durchgeführt. Dabei ist es bevorzugt möglich, dass diese Ermittlung der Materialkonstante insbesondere über ein Menü von einem Bediener initiiert bzw. gestartet werden kann.

Bevorzugt wird diese ermittelte Materialkonstante für eine Temperaturkompensation verwendet, indem die Heizleistung des ersten Heizelements und/oder die Verweildauer ermittelt wird. Dabei ist es möglich, dass diese Verweildauer mittels folgender Beziehung ermittelt wird:

$$P * t = k_{Mat} * \Delta \theta / \eta_{Ofen}$$

Dabei ist es bevorzugt möglich, dass für das Eindringen der Energie die Heizleistung und die Verweildauer jeweils zu Ungunsten des anderen Wertes variiert werden. Eine kurze Verweildauer führt zu einer hohen Heizleistung und eventuell zu starken Temperaturgradienten über die Preformdicke. Eine niedrigere Heizleistung führt dazu, dass für die Vortemperierung der Kunststoffvorformlinge mehr Heizelemente benötigt werden und daher Heizelemente für die eigentliche Profilierung im Anschluss verloren gehen.

Bei einem bevorzugten Verfahren werden die Kunststoffvorformlinge zunächst durch das eine erste Heizelement und anschließend durch das wenigstens eine zweite Heizelement erwärmt.

Bevorzugt sind die Heizelemente stationär angeordnet und die Kunststoffvorformlinge werden an diesen Heizelementen vorbeitransportiert. Während dieses Transports tritt die Erwärmung der Kunststoffvorformlinge auf. Es wäre jedoch auch möglich, dass die Kunststoffvorformlinge mit den Heizelementen mittransportiert werden. So könnten die Heizelemente beispielsweise in einer ersten Gruppe von Heizelementen vortemperiert werden und anschließend in einer zweiten Gruppe von Heizelementen profiliert werden.

Bei einem weiteren bevorzugten Verfahren wird mittels einer zweiten Temperaturmessungseinrichtung eine zweite Ist-Temperatur der Kunststoffvorformlinge gemessen und bevorzugt in Abhängigkeit von dieser zweiten Ist-Temperatur der Kunststoffvorformlinge das zweite Heizelement angesteuert. So kann beispielsweise eine Temperatur der Kunststoffvorformlinge am Ausgang oder nach dem Ausgang des Ofens bestimmt werden und in Abhängigkeit von dieser Ausgangstemperatur kann die Profilierung durch das zweite Heizelement eingestellt werden.

Bei einem weiteren bevorzugten Verfahren wird auch eine Länge der Kunststoffvorformlinge ermittelt. Diese Länge kann beispielsweise mit Hilfe einer nachfolgenden Streckblasmaschine ermittelt werden. Hierbei wird davon ausgegangen, dass die Kunststoffvorformlinge eine einheitliche Länge aufweisen. Die Preformlänge ist ein weiterer von den Kunststoffvorformlingen abhängiger Parameter. Dieser Parameter kann wie erwähnt mit anderen Materialkonstanten gemeinsam ermittelt werden, etwa indem ein Kunststoffvorformling in eine Blasstation bzw. Streckblasmaschine gefahren wird. Dabei ist es möglich, dass eine Reckstange, welche im Arbeitsbetrieb zum Dehnen der Kunststoffvorformlinge dient, sich mit reduzierter Kraft nach unten bewegt bis die Reckstange von dem Boden des Kunststoffvorformlings aufgehalten wird. Aus dieser Ist-Position kann die Länge des Kunststoffvorformlings ermittelt werden. Der Parameter könnte auch als Vorgabe für eine Position von Bodenheizelementen, wie beispielsweise von verfahrbaren Bodenkacheln dienen. In diesem Falle muss dann ein Bediener diese Parameter nicht mehr selbst ermitteln.

Daneben kann die Länge der Kunststoffvorformlinge auch dazu dienen, diejenigen Bereiche der Heizelemente zu deaktivieren, die keinen Einfluss auf die Kunststoffvorformlinge haben und beispielsweise sogar unter Bodenkacheln strahlen würden. Insgesamt können mit dem vorgeschlagenen Verfahren Temperaturschwankungen ausgeglichen werden und die Qualität der Behältnisse erhöht werden.

Erfindungsgemäß weist die Vorrichtung eine erste Temperaturmesseinrichtung auf, welche eine Ist-Temperatur der Kunststoffvorformlinge vor dem oder an einem Beginn des Transportpfads misst sowie eine Steuerungseinrichtung, welche wenigstens das erste Heizelement in Abhängigkeit von einer von der Temperaturmesseinrichtung gemessenen Temperatur der Kunststoffvorformlinge steuert. Besonders bevorzugt weist die Vorrichtung eine Vielzahl von ersten Heizelementen und/oder eine Vielzahl von zweiten Heizelementen auf. Besonders bevorzugt weist die Vorrichtung eine Vielzahl von ersten und eine Vielzahl von zweiten Heizelementen auf. Besonders bevorzugt sind diese Heizelemente individuell ansteuerbar. Bei einer weiteren bevorzugten Ausführungsform weist die Vorrichtung eine Berechnungseinheit auf, welche unter Berücksichtigung der Kunststoffvorformlingstemperatur eine Energie berechnet, die nötig ist, um die Kunststoffvorformlinge auf eine bestimmte Soll-Temperatur zu erwärmen.

Bevorzugt sind dabei diese Heizelemente entlang des Transportpfads der Kunststoffvorformlinge hintereinander angeordnet. Bevorzugt sind diese Heizelemente entlang einer geradlinig verlaufenden Strecke des Transportpfads hintereinander angeordnet. Diese einzelnen Heizelemente können dabei bevorzugt einen oder mehrere Infrarotstrahler aufweisen, die besonders bevorzugt in einer vertikalen Richtung übereinander angeordnet sind. Dabei ist es auch möglich, dass in Abhängigkeit von einer Länge der Kunststoffvorformlinge einzelne dieser Infrarotstrahler abgeschaltet oder zugeschaltet werden.

Bevorzugt weist die Transporteinrichtung zum Transportieren der Kunststoffvorformlinge ein umlaufendes Transportmittel wie insbesondere eine Transportkette auf, an dem eine Vielzahl von Halteelementen zum Halten der Kunststoffvorformlinge angeordnet sind. Daneben könnte auch ein Trägerrad vorgesehen sein, an dem die einzelnen Halteelemente angeordnet sind.

Die Halteelemente weisen bevorzugt Innengreifeinrichtungen auf, welche dazu geeignet sind, in die Mündungen der einzelnen Kunststoffvorformlinge einzugreifen um diese zu halten.

Besonders bevorzugt weist die Vorrichtung eine Dreheinrichtung auf, um die Kunststoffvorformlinge bezüglich ihrer Längsachse zu drehen. Besonders bevorzugt erfolgt dabei eine Drehung dieser Kunststoffvorformlinge während des Transports der Kunststoffvorformlinge durch die Heizeinrichtung.

Bei einer weiteren vorteilhaften Ausführungsform weist die Vorrichtung eine zweite Temperaturmesseinrichtung auf, welche eine Ist-Temperatur der Kunststoffvorformlinge insbesondere an oder nach einem Ende des Transportpfads misst und bevorzugt auch eine Steuerungseinrichtung, welche wenigstens das zweite Heizelement oder die in dem ersten Heizabschnitt angeordneten Heizelemente in Abhängigkeit von einer von der zweiten Temperaturmesseinrichtung gemessenen Temperatur der Kunststoffvorformlinge steuert.

Dabei ist es auch möglich, dass diese zweite Temperaturmesseinrichtung im Betrieb zum Steuern und insbesondere zum Regeln des Teils des Ofens, der für die Profilierung zuständig ist, dient. Außerdem kann diese zweite Temperaturmesseinrichtung auch dazu dienen, dass, insbesondere während einer Kalibrierfahrt mit einzelnen Preformen (und bevorzugt auch in Zusammenspiel mit der ersten Temperaturmesseinrichtung) deren Materialkonstante bestimmt wird.

Damit dient diese zweite Temperaturmesseinrichtung insbesondere einer Profilierung der Kunststoffvorformlinge bzw. einer Erreichung einer gewünschten Ist-Temperatur, bevor diese an einen nachfolgenden Maschinebestandteil, wie eine Streckblasmaschine, übergeben werden. Insbesondere kann diese zweite Temperaturmesseinrichtung auch verwendet werden, um eine Kalibrierung der Vorrichtung vorzunehmen, das heißt insbesondere um eine Temperaturdifferenz $\Delta\vartheta$ zu ermitteln, was wiederum dazu dienen kann, um die Materialkonstante der Kunststoffvorformlinge zu ermitteln.

Bei einer weiteren bevorzugten Ausführungsform weist wenigstens ein Heizelement und weisen bevorzugt mehrere Heizelemente jeweils eine Vielzahl von Strahlungseinheiten bzw. Heizeinheiten auf, welche besonders bevorzugt in einer Längsrichtung der zu erwärmenden Kunststoffvorformlinge übereinander angeordnet sind. Bevorzugt können diese Heizeinheiten unabhängig voneinander gesteuert werden. Auf diese Weise ist es möglich, die Kunststoffvorformlinge entlang ihrer Längsrichtung mit einem sich ändernden Temperaturprofil zu beaufschlagen bzw. zu erwärmen. Bevorzugt erstrecken sich diese Strahlungseinheiten entlang des Transportpfads der Kunststoffvorformlinge.

Mit anderen Worten bildet wenigstens ein erstes Heizelement und/oder wenigstens ein zweites Heizelement eine Vielzahl von Heizzonen aus, welche in einer Längsrichtung der Kunststoffvorformlinge übereinander angeordnet sind. Bevorzugt bildet dabei wenigstens ein Heizelement und bevorzugt bilden mehrere Heizelemente wenigstens drei derartige Heizzonen, bevorzugt wenigstens 4 derartige Heizzonen, bevorzugt wenigstens 5 derartige Heizzonen und besonders bevorzugt wenigstens 6 derartige Heizzonen aus.

So wäre es beispielsweise möglich, dass bestimmte Heizzonen eines einzelnen Heizelements aktiviert und andere deaktiviert werden. Auch können diese unterschiedlichen Heizzonen mit unterschiedlichen Leistungen betrieben werden.

Bei einer bevorzugten Ausführungsform erlaubt die Temperaturmesseinrichtung eine Temperaturmessung der Kunststoffvorformlinge auch in Abhängigkeit von deren Längsrichtung. So ist es möglich, dass die Temperatur der Kunststoffvorformlinge auch in Abhängigkeit von einer Position der Kunststoffvorformlinge in deren Längsrichtung bestimmt wird. So wäre es möglich, dass die Temperaturmesseinrichtung mehrere Sensorelemente aufweist, welche übereinander bzw. in einer Längsrichtung der zu erwärmenden Kunststoffvorformlinge übereinander angeordnet sind. Auf diese Weise ist auch eine Temperaturbestimmung der Kunststoffvorformlinge in Abhängigkeit von einer Höhenposition der Kunststoffvorformlinge möglich.

Weitere Vorteile und Ausführungsformen ergeben sich aus den beigefügten Zeichnungen:
Darin zeigen:

Fig. 1    Eine schematische Darstellung einer erfindungsgemäßen Vorrichtung;

Fig. 2    Eine Darstellung eines erfindungsgemäßen Verfahrens.

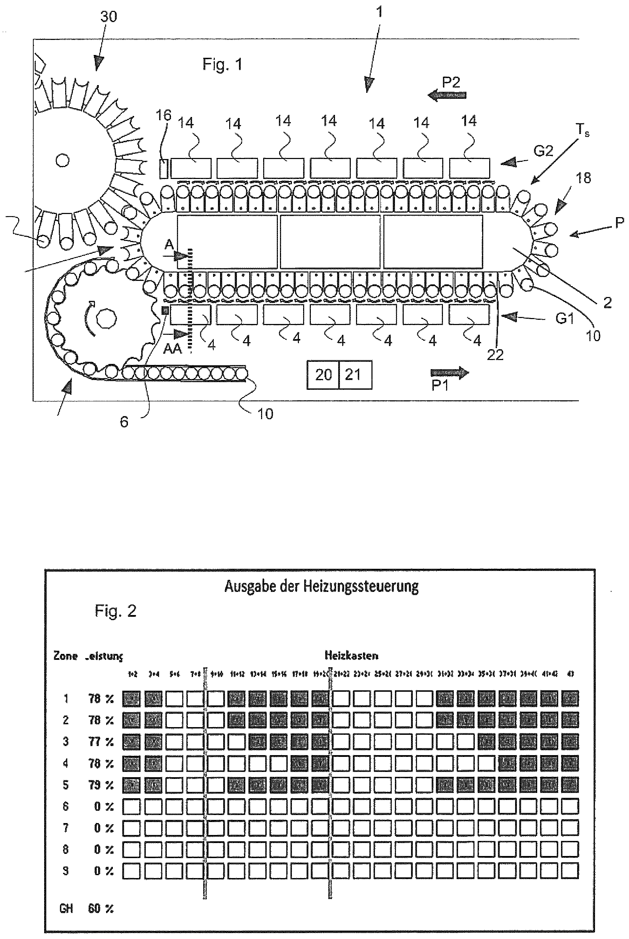

Figur 1 zeigt eine erfindungsgemäße Vorrichtung 1 zum Erwärmen von Kunststoffvorformlingen 10. Diese Vorrichtung 1 weist eine Transporteinrichtung 2 auf, welche eine Vielzahl von Halteelementen 22 zum Halten der Kunststoffvorformlinge 10 aufweist. Diese Transporteinrichtung ist hier als eine oval umlaufende Transportkette ausgebildet. Die Bezugszeichen 4 beziehen sich auf eine Vielzahl von ersten Heizelementen (welche bevorzugt Bestandteile eines ersten Heizabschnitts sind), wie Heizkästen und die Bezugszeichen 14 auf eine Vielzahl von zweiten Heizelementen (welche Bestandteile eines zweiten Heizabschnitts sind) bzw. Heizkästen. Entsprechend kennzeichnet das Bezugszeichen G1 die erste Erwärmungsstrecke (d.h. den ersten Heizabschnitt) und das Bezugszeichen G2 die zweite Erwärmungsstrecke (d.h. den zweiten Heizabschnitt).

Das Bezugszeichen P kennzeichnet den gesamten Transportpfad der Kunststoffvorformlinge, der in einen ersten Pfadabschnitt P1 und einen zweiten Pfadabschnitt P2 eingeteilt werden kann. Während des Transports entlang des ersten Transportabschnitts P1 werden die Kunststoffvorformlinge durch die Heizelemente 4 erwärmt und während des Transports P2 werden die Kunststoffvorformlinge durch die Heizelemente 14 erwärmt. Eine (nicht gezeigte) Längsrichtung der Kunststoffvorformlinge erstreckt sich hier senkrecht zur Figurenebene, d.h. die Kunststoffvorformlinge werden in vertikaler Ausrichtung mit ihrer Mündung nach oben transportiert. Es wäre jedoch auch ein Transport der Kunststoffvorformlinge mit deren Mündung nach unten denkbar.

Das Bezugszeichen 6 kennzeichnet eine erste Temperaturmesseinrichtung, wie ein Pyrometer, welches berührungslos die Temperatur, genauer die Ist-Temperatur $T_I$ der Kunststoffvorformlinge zum Beginn der Erwärmung, das heißt hier insbesondere bevor diese durch das erste Heizelement 4 erwärmt werden, erfasst. Das Bezugszeichen 20 kennzeichnet eine Steuerungseinrichtung, welche zum Steuern wenigstens der ersten Heizelemente 4 dient. Dabei werden wie oben erwähnt die Heizelemente 4 unter Verwendung der von der Temperaturmesseinrichtung 6 ermittelten Preformtemperatur bzw. Temperatur der Kunststoffvorformlinge gesteuert. Das Bezugszeichen Ts kennzeichnet die Solltemperatur, welche die Kunststoffvorformlinge nach dem Durchlaufen des ersten Pfadabschnitts erreichen sollen.

Daneben ist noch eine Prozessoreinrichtung 22, vorgesehen, welche ausgehend von der Ist-Temperatur der Kunststoffvorformlinge und unter Berücksichtigung der Solltemperatur der Kunststoffvorformlinge eine Wärmeleistung berechnet, die benötigt wird, um diese Soll-Temperatur zu erreichen. Die Steuerungseinrichtung ist bevorzugt auch dazu geeignet und bestimmt, eine Transportgeschwindigkeit der Kunststoffvorformlinge bei der Ermittlung der Heizleistung zu berücksichtigen.

Diese Steuerungseinrichtung 20 oder gegebenenfalls auch eine weitere Steuerungseinrichtung ist dafür geeignet und bestimmt, die einzelnen Heizelemente 4 anzusteuern. Dabei kann diese Ansteuerung derart erfolgen, dass die Kunststoffvorformlinge ihre gewünschte Zieltemperatur am Ausgang der Erwärmungseinrichtung erreichen

Das Bezugszeichen 18 kennzeichnet einen Umlenkbereich, in dem die Kunststoffvorformlinge von dem ersten Transportabschnitt P1 in den zweiten Transportabschnitt P2 überführt werden. Bevorzugt findet in diesem Bereich keine Erwärmung der Kunststoffvorformlinge statt. Bezugszeichen 30 kennzeichnet eine Transporteinrichtung, welche die bereits erwärmten Kunststoffvorformlinge an eine weitere Anlage wie insbesondere eine (nicht gezeigte) Streckblasmaschine (deren Bestandteil der Ofen ist) transportiert.

Das Bezugszeichen 16 kennzeichnet eine weitere Temperaturmesseinrichtung, welche am Ende des Transportpfads angeordnet ist und welche damit die Ausgangstemperatur der Kunststoffvorformlinge bestimmt. Damit ist es möglich, eine Temperaturdifferenz der Kunststoffvorformlinge zwischen dem Einlauf und dem Auslauf des Ofens zu bestimmten und damit wie oben erwähnt insbesondere die Materialkonstanten zu berechnen.

Damit werden die Kunststoffvorformlinge entlang des ersten Transportabschnitts P1 auf eine einheitliche Temperatur gebracht und in dem zweiten Transportabschnitt P2 erfolgt eine individuelle Profilierung der einzelnen Temperaturen der Kunststoffvorformlinge. Dabei ist es auch möglich dass diese Profilierung bereits in dem ersten Heizabschnitt, insbesondere in einem Endbereich dieses ersten Heizabschnitts individuell profiliert werden.

Fig. 2 zeigt eine weitere Darstellung eines erfindungsgemäßen Verfahrens. Man erkennt hier, dass die Erwärmungseinrichtung eine Vielzahl von Heizelementen bzw. Heizkästen aufweist, in dem genannten Beispiel insgesamt 43 Heizelemente, die entlang des Transportpfads der Kunststoffvorformlinge hintereinander angeordnet sind, und an denen vorbei die einzelnen Kunststoffvorformlinge transportiert werden.

Jedes dieser einzelnen Heizelemente weist dabei mehrere Heizzonen auf, die in der Längsrichtung der Kunststoffvorformlinge übereinander angeordnet sind. Diese Heizzonen können dabei von Heizstrahlern gebildet sein, die in der Längsrichtung der Kunststoffvorformlinge übereinander angeordnet sind. Man erkennt hier, dass die Heizzonen 6 - 9 bzw. die Heizstrahler dieser Zonen jeweils deaktiviert sind. Insbesondere sollen in dieser Einstellung kürzere Kunststoffvorformlinge erwärmt werden, die sich nicht bis in die Bereich der 6. - 9. Heizzone erstrecken.

In den übrigen Heizzonen sind die jeweiligen Heizelemente bzw. Heizkästen teilweise aktiviert und teilweise nicht aktiviert. Man erkennt z.B. dass in der vierten Heizzone einige der Heizelemente nicht aktiviert sind. Dies bedeutet, dass die Kunststoffvorformlinge in einer Höhenposition, die zu dieser Heizzone korrespondiert, weniger erwärmt werden als in anderen Höhenposition. Auf diese Weise kann auch in der Längsrichtung der Kunststoffvorformlinge ein sich änderndes Temperaturprofil aufgebracht werden.

Bei dem in Fig. 2 gezeigten Beispiel werden damit die in der Längsrichtung der Kunststoffvorformlinge mittleren Bereiche derselben schwächer erwärmt als die unteren und oberen Bereiche.

Man erkennt weiterhin, dass in dem gezeigten Beispiel eine Profilierung des Erwärmungsprofils ab den Heizelementen 9+10 auftritt. In dem Anfangsbereich also hier im Bereich der Heizelemente 1 - 8 werden die Kunststoffvorformlinge einheitlich erwärmt, wobei hier in den Heizzonen 1 - 5 jeweils die Heizelemente 1 - 4 aktiviert und die Heizelemente 5 - 8 deaktiviert sind.

**Bezugszeichenliste**

1 erfindungsgemäße Vorrichtung
2 Transporteinrichtung
4 erste Heizelemente bzw. Heizkästen
6 erste Temperaturmesseinrichtung
10 Kunststoffvorformlinge
14 zweite Heizelemente bzw. Heizkästen
16 weitere Temperaturmesseinrichtung
18 Umlenkbereich
20 Steuerungseinrichtung
22 Halteelemente
30 Transporteinrichtung
G1 erste Erwärmungsstrecke, erster Heizabschnitt
G2 zweite Erwärmungsstrecke, zweiter Heizabschnitt

P     Transportpfad
P1    erster Pfadabschnitt
P2    zweiter Pfadabschnitt
$T_I$    Ist-Temperatur
$T_s$    Soll-Temperatur


**Patentansprüche**

1. Verfahren zum Erwärmen von Kunststoffvorformlingen (10), wobei die Kunststoffvorformlinge (10) entlang eines vorgegebenen Transportpfads (P) transportiert werden und während dieses Transports erwärmt werden, wobei entlang des Transportpfads wenigstens ein erster Heizabschnitt mit wenigstens einem ersten Heizelement (4) sowie wenigstens ein zweiter Heizabschnitt mit wenigstens einem zweiten Heizelement (14) angeordnet ist,

   wobei mittels einer ersten Temperaturmesseinrichtung (6) eine Ist-Temperatur ($T_I$) der Kunststoffvorformlinge (10) in oder vor einem Anfangsbereich des Transportpfads (P) gemessen wird und in Abhängigkeit von dieser Ist-Temperatur ($T_I$) der Kunststoffvorformlinge (10) das wenigstens eine erste Heizelement (4) derart angesteuert wird, dass die Kunststoffvorformlinge (10) nach einer Erwärmung durch dieses wenigstens eine erste Heizelement (4) eine vorgegebene Solltemperatur (Ts) erreichen, **dadurch gekennzeichnet, dass**
   eine Materialkonstante der Kunststoffvorformlinge ermittelt wird, wobei bei dieser Ermittlung der Materialkonstanten wenigstens eine Masse der Kunststoffvorformlinge, ein Absorptionskoeffizient der Kunststoffvorformlinge und eine spezifische Wärmekapazität der Kunststoffvorformlinge berücksichtigt wird, wobei diese ermittelte Materialkonstante bei der Erwärmung der Kunststoffvorformlinge berücksichtigt wird.

2. Verfahren nach Anspruch 1,
   **dadurch gekennzeichnet, dass**
   die Kunststoffvorformlinge (10) zunächst durch das wenigstens eine erste Heizelement (4) und anschließend durch das wenigstens eine zweite Heizelement (14) erwärmt werden.

3. Verfahren nach wenigstens einem der vorangegangenen Ansprüche,
   **dadurch gekennzeichnet, dass**
   die Heizelemente (4, 14) stationär angeordnet sind und die Kunststoffvorformlinge (10) an diesen Heizelementen (4, 14) vorbeitransportiert werden.

4. Verfahren nach wenigstens einem der vorangegangenen Ansprüche,
   **dadurch gekennzeichnet, dass**
   mittels einer zweiten Temperaturmesseinrichtung (16) eine zweite Ist-Temperatur ($T_I$) der Kunststoffvorformlinge (10) gemessen wird und bevorzugt in Abhängigkeit von dieser zweiten Ist-Temperatur ($T_I$) der Kunststoffvorformlinge (10) das wenigstens eine zweite Heizelement (14) angesteuert wird.

5. Verfahren nach wenigstens einem der vorangegangenen Ansprüche,
   **dadurch gekennzeichnet, dass**
   eine Länge der Kunststoffvorformlinge (10) ermittelt wird.

6. Vorrichtung zum Erwärmen von Kunststoffvorformlingen (10) mit einer Transporteinrichtung (2), welche die Kunststoffvorformlinge (10) entlang eines vorgegebenen Transportpfads (P) transportiert, wobei diese Transporteinrichtung (2) eine Vielzahl von Halteelementen zum Halten der Kunststoffvorformlinge (10) aufweist, mit wenigstens einem ersten Heizelement (4), welches entlang dieses Transportpfads (P) angeordnet ist sowie wenigstens einem zweiten Heizelement (14), welches entlang dieses Transportpfads (P) stromabwärts des ersten Heizelements (4) angeordnet ist, wobei die Vorrichtung (1) eine erste Temperaturmesseinrichtung (6) aufweist, welche dazu eingerichtet ist, eine Ist-Temperatur ($T_I$) der Kunststoffvorformlinge (10) vor oder an einem Beginn des Transportpfads (P) zu messen sowie eine Steuerungseinrichtung (20), welche dazu eingerichtet ist, wenigstens das erste Heizelement (4) in Abhängigkeit von einer von der Temperaturmesseinrichtung (6) gemessenen Temperatur der Kunststoffvorformlinge (10) zu steuern,
   **dadurch gekennzeichnet, dass**
   die Vorrichtung dazu eingerichtet ist, eine Materialkonstante der Kunststoffvorformlinge zu ermitteln, wobei bei dieser Ermittlung der Materialkonstanten wenigstens eine Masse der Kunststoffvorformlinge, ein Absorptionskoeffizient der Kunststoffvorformlinge und eine spezifische Wärmekapazität der Kunststoffvorformlinge berücksichtigt wird, wobei die Vorrichtung dazu eingerichtet ist, diese ermittelte Materialkonstante bei der Erwärmung der Kunststoffvorformlinge zu berücksichtigen.

7. Vorrichtung (1) nach Anspruch 6,
   **dadurch gekennzeichnet, dass**
   die Vorrichtung (1) eine Vielzahl von ersten Heizelementen (4) und/oder eine Vielzahl von zweiten Heizelementen (14) aufweist.

8. Vorrichtung nach wenigstens einem der vorangegangenen Ansprüche 6 - 7,
   **dadurch gekennzeichnet, dass**
   die Vorrichtung eine zweite Temperaturmesseinrichtung (16) aufweist, welche dazu eingerichtet ist,

7

eine Ist-Temperatur ($T_I$) der Kunststoffvorformlinge (10) an einem Ende des Transportpfads (P) zu messen und bevorzugt eine Steuerungseinrichtung, welche dazu eingerichtet ist, das wenigstens eine zweite Heizelement (14) in Abhängigkeit von einer von der zweiten Temperaturmesseinrichtung (16) gemessenen Temperatur der Kunststoffvorformlinge (10) zu steuern.

9. Vorrichtung nach wenigstens einem der vorangegangenen Ansprüche 6 - 8,
**dadurch gekennzeichnet, dass**
wenigstens ein erstes Heizelement und/oder wenigstens ein zweites Heizelement (4, 14) eine Vielzahl von Heizzonen ausbildet, welche in einer Längsrichtung der Kunststoffvorformlinge (10) übereinander angeordnet sind.


**Claims**

1. Method for heating plastic preforms (10), wherein the plastic preforms (10) are transported along a predetermined transport path (P) and are heated during this transport, wherein at least one first heating section with at least one first heating element (4) as well as at least one second heating section with at least one second heating element (14) is arranged along the transport path,

   wherein by means of a first temperature measuring device (6) an actual temperature ($T_I$) of the plastic preforms (10) is measured in or before a start region of the transport path (P), and as a function of this actual temperature ($T_I$) of the plastic preforms (10) the at least one first heating element (4) is controlled in such a way that the plastic preforms (10) reach a predetermined target temperature (Ts) after heating by this at least one first heating element (4),
   **characterised in that**
   a material constant of the plastic preforms (10) is determined, wherein in this determination of the material constant at least a mass of the plastic preforms, an absorption coefficient of the plastic preforms and a specific thermal capacity of the plastic preforms is taken into consideration, wherein the determined material constant is taken into consideration during the heating of the plastic preforms.

2. Method according to claim 1,
   **characterised in that**
   the plastic preforms (10) are first of all heated by the at least one first heating element (4) and then are heated by the at least one second heating element (14).

3. Method according to at least one of the preceding claims,
   **characterised in that**
   the heating elements (4, 14) are arranged stationary and the plastic preforms (10) are transported past these heating elements (4, 14).

4. Method according to at least one of the preceding claims,
   **characterised in that**
   by means of a second temperature measuring device (16) a second actual temperature ($T_I$) of the plastic preforms (10) is measured and preferably as a function of this second actual temperature ($T_I$) of the plastic preforms (10) the at least one second heating element (14) is controlled.

5. Method according to at least one of the preceding claims,
   **characterised in that**
   a length of the plastic preforms (10) is determined.

6. Apparatus for heating plastic preforms (10) with a transport device (2) which transports the plastic preforms (10) along a predetermined transport path (P), wherein this transport device (2) has a plurality of holding elements for holding the plastic preforms (10), with at least one first heating element (4) which is arranged along this transport path (P) as well as at least one second heating element (14) which is arranged along this transport path (P) downstream of the first heating element (4),

   wherein the apparatus (1) has a first temperature measuring device (6), which is configured to measure an actual temperature ($T_I$) of the plastic preforms (10) before or at the beginning of the transport path (P), as well as a control device (20), which is configured to control at least the first heating element (4) as a function of a temperature of the plastic preforms (10) measured by the temperature measuring device (6), **characterised in that**
   the apparatus is configured to determine a material constant of the plastic preforms (10), wherein in this determination of the material constant at least a mass of the plastic preforms, an absorption coefficient of the plastic preforms and a specific thermal capacity of the plastic preforms is taken into consideration, wherein the apparatus is configured to take the determined material constant into consideration during the heating of the plastic preforms.

7. Apparatus (1) according to claim 6,
   **characterised in that**
   the apparatus (1) has a plurality of first heating elements (4) and/or a plurality of second heating elements (14).

8. Apparatus according to at least one of the preceding claims 6 - 7,
**characterised in that**
the apparatus has a second temperature measuring device (16) which is configured to measure an actual temperature ($T_I$) of the plastic preforms (10) at one end of the transport path (P) and preferably a control device which is configured to controls the at least one second heating element (14) as a function of a temperature of the plastic preforms (10) measured by the second temperature measuring device (16).

9. Apparatus according to at least one of the preceding claims 6- 8,
**characterised in that**
at least one first heating element and/or at least one second heating element (4, 14) forms a plurality of heating zones which are arranged one above the other in a longitudinal direction of the plastic preforms (10).

**Revendications**

1. Procédé pour chauffer des préformes en matière plastique (10), dans lequel les préformes en matière plastique (10) sont transportées le long d'un trajet de transport (P) prédéfini et sont chauffées pendant ce transport, dans lequel au moins une première partie de chauffage avec au moins un premier élément de chauffage (4) ainsi qu'au moins une deuxième partie de chauffage avec au moins un deuxième élément de chauffage (14) est disposée le long du trajet de transport,

dans lequel une température réelle ($T_I$) des préformes en matière plastique (10) est mesurée dans ou devant une zone initiale du trajet de transport (P) au moyen d'un premier système de mesure de température (6) et en fonction de cette température réelle ($T_I$) des préformes en matière plastique (10) le au moins un premier élément de chauffage (4) est commandé de telle sorte que les préformes en matière plastique (10) après un chauffage par ce au moins un premier élément de chauffage (4) atteignent une température de consigne (Ts) prédéfinie,
**caractérisé en ce que**
une constante de matériau des préformes en matière plastique est déterminée, dans lequel lors de cette détermination des constantes de matériau au moins une masse des préformes en matière plastique, un coefficient d'absorption des préformes en matière plastique et une capacité thermique spécifique des préformes en matière plastique sont pris en compte, dans lequel cette constante de matériau déterminée est prise en compte lors du chauffage des préformes en matière plastique.

2. Procédé selon la revendication 1,
**caractérisé en ce que**
les préformes en matière plastique (10) sont tout d'abord chauffées par le au moins un premier élément de chauffage (4) et ensuite par le au moins un deuxième élément de chauffage (14).

3. Procédé selon au moins l'une des revendications précédentes, **caractérisé en ce que**
les éléments de chauffage (4, 14) sont disposés de manière fixe et les préformes en matière plastique (10) sont transportées devant ces éléments de chauffage (4, 14).

4. Procédé selon au moins l'une des revendications précédentes, **caractérisé en ce que**
une deuxième température réelle ($T_I$) des préformes en matière plastique (10) est mesurée au moyen d'un deuxième système de mesure de température (16) et le au moins un deuxième élément de chauffage (14) est commandé de préférence en fonction de cette deuxième température réelle ($T_I$) des préformes en matière plastique (10).

5. Procédé selon au moins l'une des revendications précédentes, **caractérisé en ce que**
une longueur des préformes en matière plastique (10) est déterminée.

6. Dispositif pour chauffer des préformes en matière plastique (10) avec un système de transport (2), lequel transporte les préformes en matière plastique (10) le long d'un trajet de transport (P) prédéfini, dans lequel ce système de transport (2) présente une pluralité d'éléments de retenue pour retenir les préformes en matière plastique (10), avec au moins un premier élément de chauffage (4), lequel est disposé le long de ce trajet de transport (P) ainsi qu'au moins un deuxième élément de chauffage (14), lequel est disposé le long de ce trajet de transport (P) en aval du premier élément de chauffage (4),

dans lequel le dispositif (1) présente un premier système de mesure de température (6), lequel est conçu pour mesurer une température réelle ($T_I$) des préformes en matière plastique (10) avant ou au niveau d'un début du trajet de transport (P) ainsi qu'un système de commande (20), lequel est conçu pour commander au moins le premier élément de chauffage (4) en fonction d'une température des préformes en matière plastique (10) mesurée par le système de mesure de température (6), **caractérisé en ce que**
le dispositif est conçu pour déterminer une constante de matériau des préformes en matière plastique, dans lequel lors de cette détermination des constantes de matériau au moins une masse des préformes en matière plastique, un coefficient d'absorption des préformes en matière plastique et une capacité thermique spécifique des préformes en matière plastique sont pris en compte, dans lequel le dispositif est conçu pour prendre en compte cette constante de matériau déterminée lors du chauffage des préformes en matière plastique.

7. Dispositif (1) selon la revendication 6, **caractérisé en ce que** le dispositif (1) présente une pluralité de premiers éléments de chauffage (4) et/ou une pluralité de deuxièmes éléments de chauffage (14).

8. Dispositif selon au moins l'une des revendications précédentes 6-7, **caractérisé en ce que** le dispositif présente un deuxième système de mesure de température (16), lequel est conçu pour mesurer une température réelle ($T_I$) des préformes en matière plastique (10) au niveau d'une fin du trajet de transport (P) et de préférence un système de commande, lequel est conçu pour commander le au moins un deuxième élément de chauffage (14) en fonction d'une température des préformes en matière plastique (10) mesurée par le deuxième système de mesure de température (16).

9. Dispositif selon au moins l'une des revendications précédentes 6-8, **caractérisé en ce que** au moins un premier élément de chauffage et/ou au moins un deuxième élément de chauffage (4, 14) réalise une pluralité de zones de chauffage, lesquelles sont disposées les unes au-dessus des autres dans une direction longitudinale des préformes en matière plastique (10).

30    1

Fig. 1

P2

16  14  14  14  14  14  14  14    G2    T_s

18

A    P

2

10

AA  4  4  4  4  4  4  4    G1

22

20 | 21

P1

6

10

---

Ausgabe der Heizungssteuerung

Fig. 2

Zone  Leistung                          Heizkasten

1+2  3+4  5+6  7+8  9+10  11+12  13+14  15+16  17+18  19+20  21+22  23+24  25+26  27+28  29+30  31+32  33+34  35+36  37+38  39+40  41+42  43

1    78 %
2    78 %
3    77 %
4    78 %
5    79 %
6    0 %
7    0 %
8    0 %
9    0 %

GH   60 %

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011294086 A1
- US 2013011807 A1
- US 2005146065 A1
- JP H11348106 A
- JP S6034827 A